# EUROPEAN PATENT SPECIFICATION

(11) **EP 3 287 022 B1**
(45) Date of publication and mention of the grant of the patent: **03.06.2020**
(21) Application number: 17189520.4
(22) Date of filing: 05.09.2017
(51) Int. Cl.: A24F 47/00, H05B 1/02, G06F 3/0484

(54) **CONTROL METHOD AND AEROSOL GENERATING DEVICE USING SAME**
STEUERUNGSVERFAHREN UND AEROSOLERZEUGUNGSVORRICHTUNG MIT VERWENDUNG DAVON
PROCÉDÉ DE COMMANDE ET DISPOSITIF DE PRODUCTION D'AÉROSOL L'UTILISANT

(30) Priority: 06.09.2016 CN 201610802748
(43) Date of publication of application: 28.02.2018
(73) Proprietor: Shenzhen First Union Technology Co., Ltd., Shenzhen, Guangdong 518104 (CN)
(72) Inventor: LI, Yonghai, Shenzhen, Guangdong 518104 (CN); XU, Zhongli, Shenzhen, Guangdong 518104 (CN); HU, Shuyun, Shenzhen, Guangdong 518104 (CN)
(74) Representative: Proi World Intellectual Property GmbH

(56) References cited:
- WO-A1-2015/082560
- US-A1- 2007 045 288
- US-A1- 2011 036 346
- US-A1- 2014 334 804
- US-A1- 2015 257 445
- US-A1- 2015 359 263

## Description

### TECHNICAL FIELD

The present invention relates to electronic cigarettes, and particularly to a control method and an aerosol generating device using same.

### BACKGROUND ART

A typical electronic cigarette usually includes only one working mode, and the working mode is preset. Even when different working modes are pre-set , like shown in US 2014/334804 A1, US 2015/257445 A1, US 2011 /036346 A1, or US 2015/359263 A1, such electronic cigarette cannot satisfy demand (for aerosol) of users in different time periods.

What are needed, therefore, are a control method and an aerosol generating device using same, which can overcome the above shortcomings.

### SUMMARY

The present disclosure relates to a control method of an aerosol generating device according to claim 1 as well as to an aerosol generating device according to claim 9.

### BRIEF DESCRIPTION OF THE DRAWINGS

Many aspects of the present disclosure can be better understood with reference to the following drawings. The components in the drawings are not necessarily drawn to scale, the emphasis instead being placed upon clearly illustrating the principles of the present disclosure. Moreover, in the drawings, like reference numerals designate corresponding parts throughout the several views.
FIG. 1 is a flow chart in a custom mode of an aerosol generating device according to an embodiment.
FIG. 2 is a side view of an electronic cigarette, including a power supply.
FIG. 3 is a cross-sectional view of the power supply of FIG. 2.
FIG. 4 is a schematic view showing working modes stored in a memorizing unit.

### DETAILED DESCRIPTION

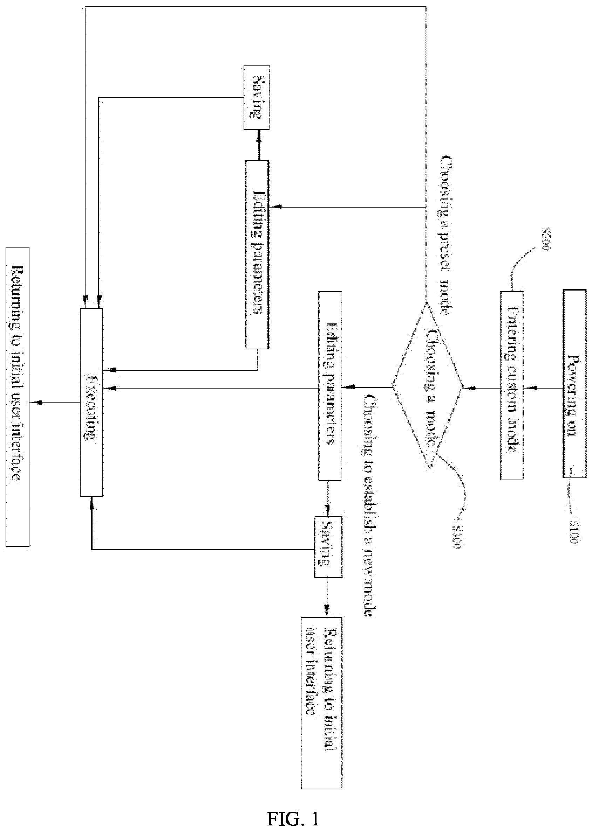

Referring to FIG. 1, a flowchart of a control method of the aerosol generating device is shown.

In step S100, the aerosol generating device is powered on.

In step S200, the user of the aerosol generating device accesses a custom mode by a user interface. A display of the aerosol generating device displays a plurality of smoking modes stored in a memorizer and an option of establishing a new mode.

In step S300, the user chooses a corresponding mode via the user interface. If the user chooses one of the modes stored in the memorizer, the step S400 is executed. If the user chooses the option of setting up a new smoking mode, the step S500 is executed.

In step S400, if the user chooses one of the modes, the aerosol generating device works in the selected mode; if the user chooses to edit one of the modes, the user can edit the mode, and the step S500 is executed.

In step S500, the user edits smoking parameters via the user interface. After finishing editing, if the user chooses to save, the step S510 is executed; if the user chooses to run the edited mode, the step S520 is executed.

In step S510, the smoking mode is saved, and the display will return to an initial user interface automatically in two minutes. The saved mode may be a new smoking mode, or an edited smoking mode.

In step S520, the aerosol generating device works in the selected mode, and the display returns to the initial user interface automatically after two minutes.

In the present embodiment, the aerosol generating device forms aerosol by heating tobacco substance. The smoking parameters in step S500 may include at least one of a heating temperature, a heating frequency, a heating time, and a heating power. In detail, when heating tobacco liquid, a highest temperature is controlled to 280 Celsius degrees; when heating solid tobacco substance, the highest temperature is controlled to 350 Celsius degrees. The heating time may be a time duration every time when the user inhales the aerosol. The configuration of the heating power is configured (i.e., structured and arranged) for adjusting the heating temperature of the aerosol generating device.

In step S510, the smoking mode set by the user is sent to a memorizing unit in a form of commands, and is then saved in the memorizing unit. In this process, if the user does not operate for a certain time period, the display will return to the initial user interface.

In other embodiments, the control method may further include a step of deleting the preset smoking mode in the custom mode, a step of exiting the custom mode, or a step of returning to a previous step.

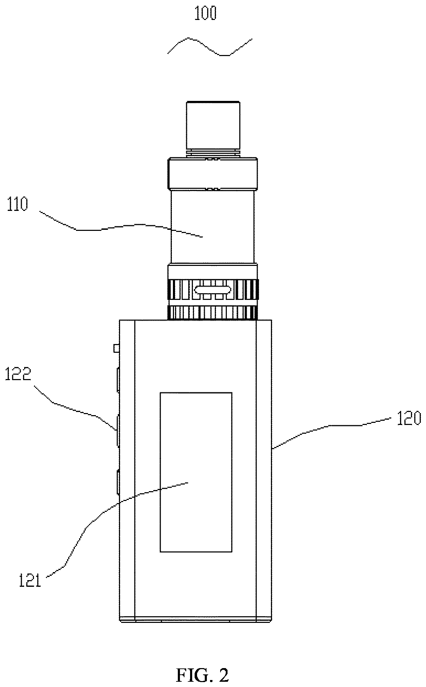

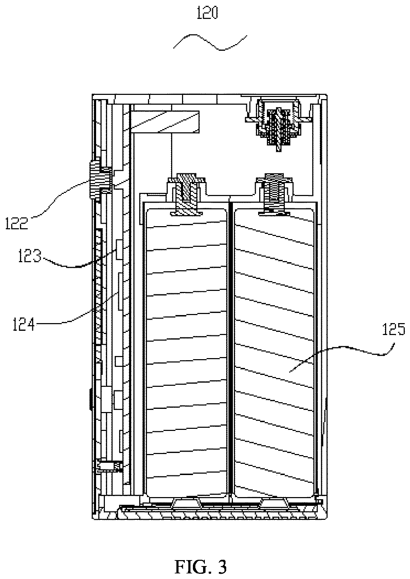

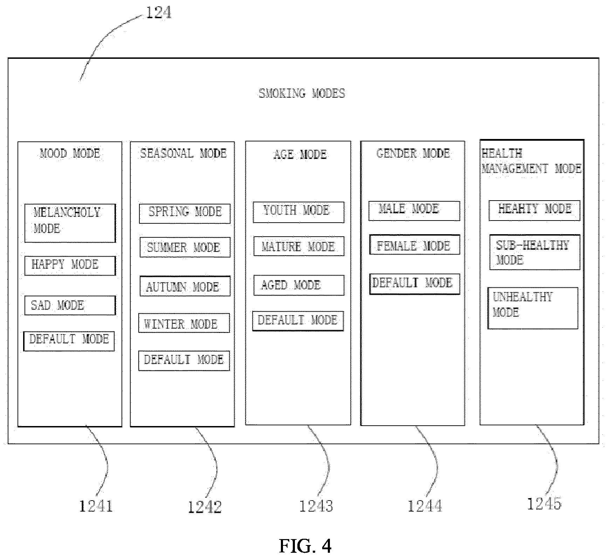

Referring to FIGS. 2-4, the aerosol generating device 100 includes an atomizer 110 and a power supply 120. The atomizer 110 includes tobacco substance and a component configured for generating aerosol from the tobacco substance. The power supply 120 includes a display 121, an operation panel 122, a controller 123, a memorizing unit 124, and a power module 125. The memorizing unit 124 is configured for storing a plurality of smoking modes. These smoking modes may include a mood mode 1241, a seasonal mode 1242, an age mode 1243, a gender mode 1244, and a health management mode 1245.

In detail, the mood mode may include a melancholy mode, a happy mode, a sad mode, and a default mode. In the melancholy mode, the operating power is in an approximate range from 15 Watts to 80 Watts; in the happy mode, the operating power is in an approximate range from 5 Watts to 15 Watts; in the sad mode, the operating power is in an approximate range from 3 Watts to 8 Watts; in the default mode, the operating power is not limited.

The seasonal mode may include a spring mode, a summer mode, an autumn mode, a winter mode, and a default mode. In the spring mode, the operating power is in an approximate range from 15 Watts to 80 Watts; in the summer mode, the operating power is in an approximate range from 5 Watts to 50 Watts; in the autumn mode, the operating power is in an approximate range from 5 Watts to 35 Watts; in the winter mode, the operating power is in an approximate range from 15 Watts to 120 Watts; in the default mode, the operating power is not limited.

The age mode 1243 may include a youth mode, a mature mode, an aged mode, and a default mode. In the youth mode, the operating power is not limited; the mature mode, the operating power is in an approximate range from 5 Watts to 50 Watts; in the aged mode, the operating power is in an approximate range from 5 Watts to 35 Watts.

The gender mode may include a male mode, a female mode, and a default mode. In the male mode, the operating power is in an approximate range from 5 Watts to 120 Watts; in the female mode, the operating power is in an approximate range from 3 Watts to 35 Watts; in the default mode, the operating power is not limited.

The health management mode 1245 may include a healthy mode, a sub-healthy mode, and an unhealthy mode. In the healthy mode, a nicotine content of the tobacco substance is not limited; in the sub-healthy mode, the nicotine content of the tobacco substance is in an approximate range from 0 mg/L to 6 mg/L; in the unhealthy mode, the nicotine content of the tobacco substance is 0 mg/L.

The operation panel 122 includes a plurality of buttons, for example, selecting buttons, a power switch, and so on. A new smoking mode may be set up via the operation panel 122, and the existing smoking mode may be edited via the operation panel 122. The display 121 is configured for displaying a working status of the aerosol generating device 100.

## Claims

1. A control method of an aerosol generating device, the control method comprising:
in a step (S100), powering on the aerosol generating device;
in a further step (S200), displaying a plurality of preset smoking modes and an option of establishing a new smoking mode;
in an another further step (S300), when a user selects a preset smoking mode, a first alternative step (S400) being executed, when the user chooses the option of establishing a new smoking mode, a second alternative step (S500) being executed;
in the first alternative step (S400), when the user chooses to execute the preset smoking mode, a final step (520) being executed, when the user chooses to edit the preset smoking mode, the second alternative step (S500) being executed;
in the second alternative step (S500), the user editing smoking parameters of the preset smoking mode, a choice being made between saving the smoking parameters and running the edited mode, when the user chooses to save the smoking parameters, a saving step (S510) being executed, when the user chooses to run the aerosol generating device, the final step (S520) being executed;
in the saving step (S510), the aerosol generating device saving the smoking mode; and
in the final step (S520), the aerosol generating device working in the smoking mode when the user inhales.

2. The control method according to claim 1, wherein the smoking mode set by the user is sent to a memorizing unit (124) in a form of commands, and is then saved in the memorizing unit (124).

3. The control method according to claim 1, further comprising a step of deleting a preset smoking mode in the custom mode.

4. The control method according to claim 1, further comprising a step of exiting the custom mode.

5. The control method according to claim 1, further comprising a step of returning to a previous step.

6. The control method according to claim 1, wherein the aerosol generating device forms aerosol by heating tobacco substance.

7. The control method according to claim 6, wherein the smoking parameters comprise at least one of a heating temperature, a heating frequency, a heating time, and a heating power.

8. The control method according to claim 1, further comprising a step of returning to an initial user interface after the saving step (S510) or the final step (S520).

9. An aerosol generating device (100), comprising:
an atomizer (110), and
a power supply (120), the power supply (120) comprising:
an operation (122);
a display (121);
acontroller (123);
a memorizing unit (124);
wherein the aerosol generating device (100) is controlled using the control method according to any of claims 1-8.

## Patentansprüche

1. Steuerverfahren einer Aerosolerzeugungsvorrichtung, wobei das Steuerverfahren umfasst:
in einem Schritt (S100), Einschalten der Aerosolerzeugungsvorrichtung;
in einem weiteren Schritt (S200), Anzeigen mehrerer voreingestellter Rauchmodi und einer Option zum Einrichten eines neuen Rauchmodus;
in einem weiteren Schritt (S300), wenn ein Benutzer einen voreingestellten Rauchmodus auswählt, wird ein erster alternativer Schritt (S400) ausgeführt, wenn der Benutzer die Option zum Einrichten eines neuen Rauchmodus wählt, wird ein zweiter alternativer Schritt (S500) ausgeführt;
in dem ersten alternativen Schritt (S400), wenn der Benutzer den voreingestellten Rauchmodus ausführt, wird ein finaler Schritt (S520) ausgeführt, wenn der Benutzer den voreingestellten Rauchmodus bearbeitet, wird der zweite alternative Schritt (S500) ausgeführt;
in dem zweiten alternativen Schritt (S500) bearbeitet der Benutzer die Rauchparameter des voreingestellten Rauchmodus, wird eine Wahl zwischen der Speicherung der Rauchparameter und dem Ausführen des bearbeiteten Modus getroffen;
wenn der Benutzer auswählt, die Rauchparameter zu speichern, wird ein Speicherschritt (S510) ausgeführt;
wenn der Benutzer auswählt, die Aerosolerzeugungsvorrichtung laufen zu lassen, wird der finale Schritt (S520) ausgeführt;
in dem Speicherschritt (S510) speichert die Aerosolerzeugungsvorrichtung den Rauchmodus; und
in dem finalen Schritt (S520) arbeitet die Aerosolerzeugungsvorrichtung im Rauchmodus, wenn der Benutzer einatmet.

2. Steuerverfahren nach Anspruch 1, wobei der vom Benutzer eingestellte Rauchmodus in Form von Befehlen an eine Speichereinheit (124) gesendet und dann in der Speichereinheit (124) gespeichert wird.

3. Steuerverfahren nach Anspruch 1, ferner umfassend einen Schritt des Löschens eines voreingestellten Rauchmodus im benutzerdefinierten Modus.

4. Steuerverfahren nach Anspruch 1, ferner umfassend einen Schritt zum Verlassen des benutzerdefinierten Modus.

5. Steuerverfahren nach Anspruch 1, ferner umfassend einen Schritt der Rückkehr zu einem vorherigen Schritt.

6. Steuerverfahren nach Anspruch 1, wobei die Aerosolerzeugungsvorrichtung durch Erhitzen der Tabaksubstanz Aerosol bildet.

7. Steuerverfahren nach Anspruch 6, wobei die Rauchparameter mindestens einen von einer Heiztemperatur, einer Heizfrequenz, einer Heizdauer und einer Heizleistung umfassen.

8. Steuerverfahren nach Anspruch 1, ferner umfassend einen Schritt des Zurückkehrens zu einer anfänglichen Benutzerschnittstelle nach dem Speicherschritt (S510) oder dem finalen Schritt (S520).

9. Aerosolerzeugungsvorrichtung (100), umfassend:
einen Zerstäuber (110), und
eine Stromversorgung (120), wobei die Stromversorgung (120) umfasst:
ein Bedienfeld (122);
ein Bildschirm (121);
eine Steuerung (123);
eine Speichereinheit (124);
wobei die Aerosolerzeugungsvorrichtung (100) unter Verwendung des Steuerverfahrens gemäß einem der Ansprüche 1 bis 8 gesteuert wird.

## Revendications

1. Procédé de commande d'un dispositif de génération d'aérosol, le procédé de commande comprenant :
dans une (S100), la mise sous tension du dispositif de génération d'aérosol ;
dans une étape supplémentaire (S200), l'affichage d'une pluralité de modes fumeurs prédéfinis et une option d'établissement d'un nouveau mode fumeurs ;
dans une autre étape supplémentaire (S300) lorsqu'un utilisateur sélectionne un mode fumeurs prédéfini, une première étape alternative (S400) étant exécutée, lorsque l'utilisateur choisit l'option d'établir un nouveau mode fumeurs, une seconde étape alternative (S500) étant exécutée ;
dans la première étape alternative (S400), lorsque l'utilisateur choisit d'exécuter le mode fumeurs prédéfini, une étape finale (520) étant exécutée, lorsque l'utilisateur choisit de modifier le mode fumeurs prédéfini, la seconde étape alternative (S500) étant exécutée ; dans la seconde étape alternative (S500), l'utilisateur édite les paramètres fumeurs du mode fumeurs prédéfini, un choix étant fait entre enregistrer les paramètres fumeurs et mettre en oeuvre le mode modifié, lorsque l'utilisateur choisit d'enregistrer les paramètres fumeurs, une étape d'enregistrement (S510) étant exécutée, lorsque l'utilisateur choisit de mettre en oeuvre le dispositif de génération d'aérosol, l'étape finale (S520) étant exécutée ; dans l'étape d'enregistrement (S510), le dispositif de génération d'aérosol enregistrant le mode fumeurs ; et
dans l'étape finale (S520), le dispositif de génération d'aérosol fonctionne en mode fumeurs lorsque l'utilisateur inhale.

2. Procédé de commande selon la revendication 1, dans lequel le mode fumeurs défini par l'utilisateur est envoyé à une unité de mémorisation (124) sous forme de commandes, puis est enregistré dans l'unité de mémorisation (124).

3. Procédé de commande selon la revendication 1, comprenant en outre une étape de suppression d'un mode fumeurs prédéfini en mode personnalisé.

4. Procédé de commande selon la revendication 1, comprenant en outre une étape de sortie du mode personnalisé.

5. Procédé de commande selon la revendication 1, comprenant en outre une étape de retour à une étape précédente.

6. Procédé de commande selon la revendication 1, dans lequel le dispositif de génération d'aérosol forme un aérosol en chauffant la substance de tabac.

7. Procédé de commande selon la revendication 6, dans lequel les paramètres fumeurs comprennent au moins une parmi une température de chauffage, une fréquence de chauffage, un temps de chauffage et une puissance de chauffage.

8. Procédé de commande selon la revendication 1, comprenant en outre une étape de retour à une interface utilisateur initiale après l'étape d'enregistrement (S510) ou l'étape finale (S520).

9. Dispositif de génération d'aérosol (100), comprenant :
un atomiseur (110) et une alimentation électrique (120), l'alimentation électrique (120) comprenant :
un panneau de fonctionnement (122) ;
un écran (121) ;
un contrôleur (123) ;
une unité de mémorisation (124) ;
dans lequel le dispositif de génération d'aérosol (100) est commandé à l'aide du procédé de commande selon l'une des revendications 1 à 8.
